# EUROPEAN PATENT SPECIFICATION

(11) **EP 3 118 704 B1**
(45) Date of publication and mention of the grant of the patent: **05.05.2021**
(21) Application number: 15761437.1
(22) Date of filing: 15.01.2015
(51) Int. Cl.: G05D 1/02, B66C 13/18

(54) **CONVEYING VEHICLE SYSTEM, METHOD OF INSPECTING CONVEYING VEHICLE SYSTEM, AND INSPECTION TRUCK**
FÖRDERFAHRZEUGSYSTEM, VERFAHREN ZUR INSPEKTION DES FÖRDERFAHRZEUGSYSTEMS UND INSPEKTIONSLASTKRAFTWAGEN
SYSTÈME DE VÉHICULE DE TRANSPORT, MÉTHODE D'INSPECTION DE SYSTÈME DE VÉHICULE DE TRANSPORT, ET CAMION D'INSPECTION

(30) Priority: 10.03.2014 JP 2014046796
(43) Date of publication of application: 18.01.2017
(73) Proprietor: Murata Machinery, Ltd., Kyoto-shi, Kyoto 601-8326 (JP)
(72) Inventor: ONDA Yoshinori, Inuyama-shi Aichi 484-8502 (JP); HOUKI Tetsuya, Inuyama-shi Aichi 484-8502 (JP)
(74) Representative: Stöckeler, Ferdinand
(86) International application number: PCT/JP2015/050893
(87) International publication number: WO 2015/136967

(56) References cited:
- JP-A- 2000 316 206
- JP-B2- 4 117 625
- US-A1- 2007 016 369

## Description

### BACKGROUND OF THE INVENTION

### Field of the Invention

The present invention relates to a transport vehicle system such as an overhead travelling vehicle system, and in particular to an inspection of the transport vehicle system.

### Description of the Related Art

An overhead travelling vehicle system is used as a transport vehicle system in a clean room or the like, and a plurality of overhead travelling vehicles travel along a travelling route installed in an overhead space. Once the overhead travelling vehicle system is brought into operation, it is difficult to inspect the travelling route without stopping the system. Therefore, maintenance is delayed in some cases.

JP 4 117 625 B2 proposes to use a part of a transport vehicle as an inspection vehicle. However, such an inspection vehicle has not been put into practice.

US 2007/0016369 A1 discloses a guided vehicle system in which a probe vehicle is controlled to actually travel on a travel route. The probe vehicle is equipped with sensors for verifying the states of routes. Based on the verified data of the probe vehicle, a map of the routes is updated.

The preamble of claims 1, 13 and 14 is known from this document

### SUMMARY OF THE INVENTION

### Problem to be Solved by the Invention

An object of the present invention is to provide a transport vehicle system that includes an inspection vehicle that coexists with other transport vehicles and is controlled by a ground controller in the same manner as other transport vehicles.

### Means for Solving the Problem

One aspect of the present invention is a transport vehicle system wherein a plurality of transport vehicles and at least one inspection vehicle travel along a travelling route according to instructions from a ground controller, wherein the inspection vehicle and the plurality of transport vehicles have common rules for avoiding collision and speed regulation and a common pattern for acceleration and deceleration, and wherein the inspection vehicle is configured to measure inspection data of the travelling route while travelling along the travelling route.

Another aspect of the present invention is a method for inspecting a transport vehicle system wherein a plurality of transport vehicles travel along a travelling route according to instructions from a ground controller, wherein the transport vehicle system includes an inspection vehicle that has common rules for avoiding collision and speed regulation and a common pattern for acceleration and deceleration with the plurality of transport vehicles, and wherein the inspection vehicle measures inspection data of the travelling route while travelling along the travelling route.

Yet another aspect of the present invention is an inspection vehicle that inspects a travelling route in a transport vehicle system wherein a plurality of transport vehicles travel along the travelling route according to instructions from a ground controller, wherein the inspection vehicle has common rules for avoiding collision and speed regulation and a common pattern for acceleration and deceleration with the plurality of transport vehicles and is configured to measure inspection data of the travelling route while travelling along the travelling route. Preferably, the inspection vehicle and the plurality of transport vehicles are configured to transport articles that comply with the same standards under the same conditions. In the present specification, the description related to the transport vehicle system applies to the inspection method and the inspection vehicle.

The transport vehicles are overhead travelling vehicles, auto-guided vehicles, or the like, and, specifically, are overhead travelling vehicles. According to the present invention, it is realized to inspect the transport vehicle system in operation without stopping the system. Therefore, preventive maintenance may be done before a problem in the transport vehicle system grows to a serious problem, and therefore, the operating rate of the transport vehicle system is improved.

Preferably, the inspection vehicle is configured to store inspection data in a memory without outputting the inspection data to outside while the inspection vehicle is travelling. This configuration prevents the amount of communication from increasing.

The inspection vehicle is configured to sample inspection data at each sampling period and store inspection data that is most deviated from a permissible range within one storage period as inspection data for the storage period, where one storage period comprises a plurality of sampling periods. Thus, one record is required in one storage period, and the required storage capacity is reduced.

According to the invention the inspection vehicle is configured to store inspection data that is most deviated from a target value within the permissible range in a storage period when no inspection data is out of the permissible range. This configuration makes it possible to collect inspection data that is close to the limits of the permissible range.

Preferably, the plurality of transport vehicles and the inspection vehicle are configured to communicate with the ground controller via a LAN, and the inspection vehicle is further provided with a wireless communication unit that is assigned a unique communication address, and the inspection vehicle is configured to output the inspection data to a diagnostic computer for the transport vehicle system via a wireless access point connected to the diagnostic computer. This configuration reduces the load on the LAN because the inspection vehicle outputs the inspection data from the wireless access point to the diagnostic computer by bypassing the LAN.

Preferably, the inspection vehicle and the plurality of transport vehicles are configured to transport a same type of carriers, and wherein the inspection vehicle is configured to measure oscillation that a carrier undergoes during transportation as inspection data. The carriers are, for example, containers for semiconductor wafers, reticles, liquid crystal panels, or the like, and such a configuration makes it possible to inspect the degree of oscillation that transported articles undergo during transportation.

Preferably, the inspection vehicle and the plurality of transport vehicles are configured to receive electricity from a feeder line that is laid on the travelling route, without being in contact with the feeder line, and the inspection vehicle is configured to measure electrical power received from the feeder line as inspection data. This configuration makes it possible to inspect the reliability of non-contact electricity feeding. It is possible that power for non-contact electricity feeding is not always supplied, and may be supplied according to the transport vehicle's demand for power. If this is the case, the voltage across a pick-up unit may be inspected. Alternatively, an inspection may be performed as to whether or not power that is sufficient for driving the motors such as the running motor and the elevation motor has been received.

Preferably, the inspection vehicle and the plurality of transport vehicles are configured to perform wireless communication with the ground controller, and the inspection vehicle is configured to measure strength of an electric field received via wireless communication and a success rate of the wireless communication, as inspection data. Wireless communication is, for example, wireless feeder communication, communication using a frequency that differs from the frequency for electricity fed from the feeder line, communication using a wireless LAN, or the like. This configuration makes it possible to inspect the communication environment of any kind of communication.

The inspection vehicle and the plurality of transport vehicles are configured to read bar codes provided on the travelling route, and the inspection vehicle is configured to measure data that indicates a good or bad attachment of the bar codes as inspection data. This configuration makes it possible to inspect the attachment of bar codes, and in particular, makes it possible to prevent a poorly attached bar codes from interfering with a bar code reader.

The travelling route is provided with a guide that guides the inspection vehicle and the plurality of transport vehicles, and the inspection vehicle is configured to measure data that indicates a good or bad positional condition of the guide as inspection data. This configuration makes it possible to inspect the positional condition of the guide.

Preferably, the inspection vehicle is configured to measure inspection data regarding slack in the feeder line. This configuration makes it possible to inspect the slack in the feeder line.

Preferably, the diagnostic computer is configured to display information regarding a problem in the transport vehicle system on a monitor with superimposing the information regarding the problem on a layout of the travelling route. This display allows the operator to visually recognize the position where a problem has occurred.

It is also preferable that the diagnostic computer is configured to display an icon while changing a type of the icon according to a type of the problem in the transport vehicle system, and changing a color of the icon according to an extent of the problem. This configuration allows the operator to visually recognize the type and the extent of a problem.

### BRIEF DESCRIPTION OF THE DRAWINGS

FIG. 1 is a side view showing an inspection vehicle and a rail.
FIG. 2 is a plan view showing a carriage unit and a guide rail.
FIG. 3 is a diagram showing an inspection of electricity received from a Litz wire and an inspection of feeder communication.
FIG. 4 is a diagram showing a communication environment for the inspection vehicle.
FIG. 5 is a block diagram for a diagnostic computer.
FIG. 6 is a diagram showing a display where the inspection vehicle is positioned at the center.
FIG. 7 is a diagram showing a display of results of an inspection of a travelling route.
FIG. 8 is a diagram showing a display of results of an inspection when the inspection vehicle has travelled multiple times around the travelling route.

### DETAILED DESCRIPTION OF THE PREFERRED EMBODIMENTS

The best embodiment for carrying out the present invention is described in the following.

### Embodiment

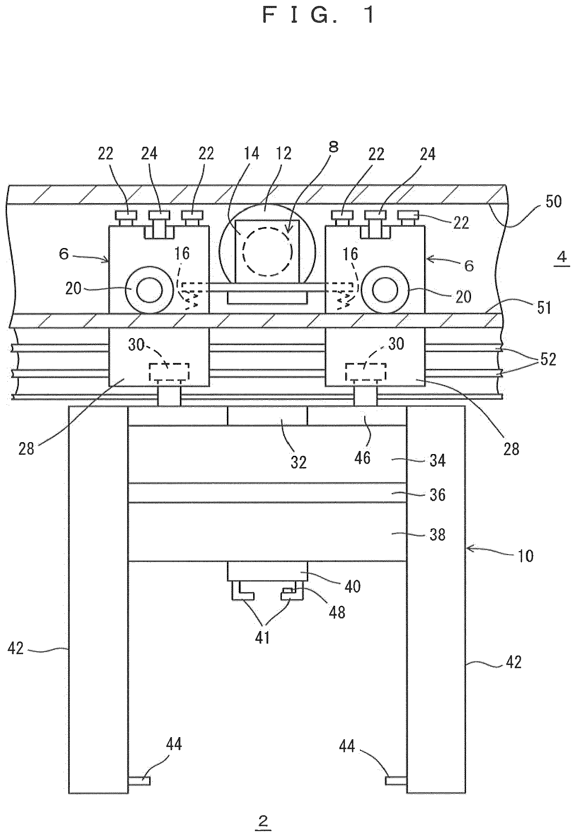

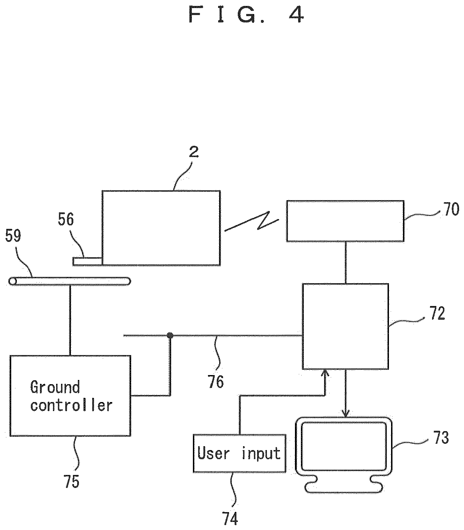

FIGS. 1 to 8 shows an embodiment. Reference numeral 2 indicates an inspection vehicle. The inspection vehicle 2 is the same as other overhead travelling vehicles except that the inspection vehicle 2 is equipped with an apparatus for inspecting a rail 4 and is provided with a processor for inspection data. The inspection vehicle 2 travels according to the same travelling rules as those for the other overhead travelling vehicles, specifically, the same rule for avoiding a collision, the same rule for speed and the same pattern for acceleration and deceleration. The inspection vehicle communicates with a load port, a buffer, a stocker, and so on according to the same communication protocol as that for the other overhead travelling vehicles. The inspection vehicle 2 receives travelling instructions according to the same protocol as that for the other overhead travelling vehicles from a ground controller shown in FIG. 4, and travels from a specified departure point to a specified destination in the instructions. The inspection vehicle 2 transports articles and inspects the travel rail 4 while travelling. Note that other several hundred overhead travelling vehicles travel along the rail 4, and one or more inspection vehicles 2 are arranged, for example.

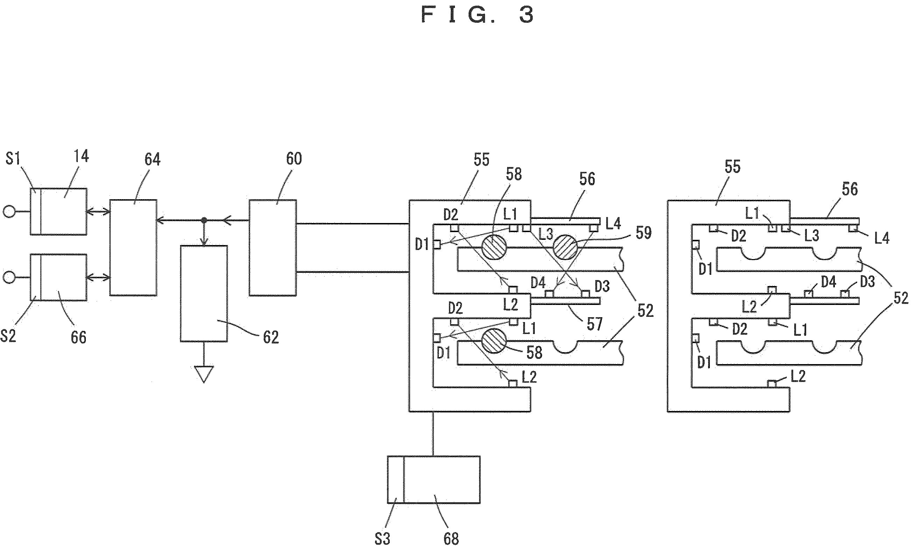

The rail 4 is provided within an overhead space of a clean room, for example. Each inspection vehicle 2 includes a pair of front and rear carriage units 6, and a driving wheel unit 8 is located between the carriage units 6. Reference numeral 10 indicates a main body of the inspection vehicle 2. The driving wheel unit 8 is provided with a running wheel 12, namely a drive wheel, and a running motor 14. Front and rear ends of the driving wheel unit 8 are supported by the carriage units 6 so as to be rotatable about a vertical axis and are pressed by biasing parts 16 so as to be brought into contact with a tread 50 of the rail 4 at a predetermined contact pressure. The carriage units 6 are each provided with a follower wheel 20 and guide rollers 22 and 24 for switching between divergence and straightforward travel. The carriage units 6 are each provided with a pick-up unit 28, and support the main body 10 by means of cross-roller bearings 30. The details of the pick-up unit 28 are shown in FIG. 3.

The inspection vehicle 2 is provided with a linear sensor 32 for reading magnetic marks that are installed to the rail 4 and detects the absolute position of the inspection vehicle 2. The inspection vehicle 2 also detects the number of rotations of the running wheel 12 by an encoder (not shown) in the running motor 14. Furthermore, the inspection vehicle communicates with the ground controller with a wireless feeder and a wireless LAN. The main body 10 is provided with a lateral unit 34, with which the main body 10 laterally and horizontally moves a *θ* unit 36 and a hoist 38 in a direction orthogonal to the travelling direction. The *θ* unit 36 rotates the hoist 38 about a vertical axis. The hoist 38 raises and lowers a hand 40 that is provided with a chuck 41. The rail 4 is provided with treads 50 and 51. The rail 4 holds Litz wires by Litz wire holders 52 and feeds electricity to the pick-up unit 28 without being in contact.

The inspection vehicle 2 is provided with a displacement sensor 46 located in an upper portion of the main body 10 for example with which the inspection vehicle 2 performs an inspection as to whether or not bar codes (not shown) attached to the rail 4 are drooping from a normal position. If a bar code is drooping, there is the risk of the bar code interfering with a bar code reader. Also, an oscillation sensor 48 such as an acceleration sensor is provided in the chuck 41 for example with which the inspection vehicle 2 inspects oscillation that a transport article such as an FOUP undergoes when the inspection vehicle 2 travels and when the transport article is raised/lowered. Note that the oscillation sensor 48 may be provided in an FOUP.

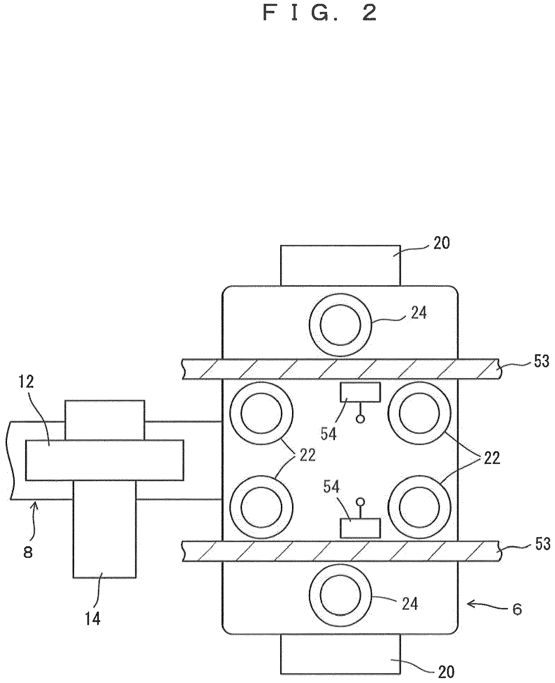

As shown in FIG. 2, a pair of guides 53 protrude downward and guide the guide rollers 22 and 24 to guide switching between divergence and straightforward travel. Although the thickness of the guides 53 is precise, the gap between the guide rollers 22 and the guides 53 may fluctuate due to incorrect attachment of the rail 4, for example. Therefore, the positions of the guide surfaces of the guides 53 on the side of the guide rollers 22 are inspected by eddy current sensors 54. Consequently, the positions of the guide surfaces on the side of the guide roller 24 are simultaneously inspected. The eddy current sensors 54 are examples of sensors that are capable of measuring the gap to the guide surfaces. In the embodiment, in order for the eddy current sensors 54 to be applicable to both rails made of aluminium and rails made of stainless steel, eddy current sensors for aluminium are provided in one of the pair of carriage units 6, and eddy current sensors for iron are provided in the other of the pair of carriage units 6. The positions of the guide surfaces on the side of the guide rollers 24 may be inspected by the eddy current sensors 54.

FIG. 3 shows inspection concerning a Litz wire 58 and a feeder line 59 which are supported by Litz wire holders 52. The Litz wire holders 52 are respectively provided on both left and right sides of the rail 4. Therefore, light sources L1 to L4 and light-receiving elements D1 to D4 are provided on both left and right sides of the rail 4 such that both left and right Litz wire holders 52 can be inspected. Reference numeral 55 indicates pick-up cores made of magnetic materials on each of which a coil, not shown in the drawings, is wound and receive electricity due to a magnetic field generated by alternating current flowing through a Litz wire 58 without contact. The pick-up cores 55 also wirelessly communicate with a feeder line 59 via an antenna 56.

The slack in a Litz wire 58 is inspected by light sources L1 and L2 and light-receiving ends D1 and D2, and the slack in a feeder line 59 is inspected by light sources L3 and L4 and light-receiving ends D3 and D4. Note that a rod 57 supports the light-receiving ends D3 and D4. Both ends of the coil wound on each pick-up core 55 are connected to a rectifier 60, and electricity from the rectifier 60 is accumulated in a capacitor 62. Power is supplied to the running motor 14 and an elevation motor 66 via an inverter 64. Power supply voltage across the running motor 14 is monitored by a voltage sensor S1, and power supply voltage across the elevation motor 66 is monitored by a voltage sensor S2.

Reference numeral 68 indicates a communication unit for feeder communication, and the unit 68 communicates with a feeder line 59 via an antenna 56. A communication environment measurer S3 measures the strength of the electric field of signals from the feeder line 59 and the communication success rate of the signal, for example, the success rate of transmission, or the success rate of both reception and transmission.

FIG. 4 shows a communication environment for the inspection vehicle 2. The inspection vehicle 2, as well as the other transport vehicles, communicates with a ground controller 75 by feeder communication for example, transport articles and inspect the rail according to instructions from the ground controller 75. These vehicles travel according to predetermined rules and thereby avoid interference with other overhead travelling vehicles. The inspection vehicle 2 is capable of performing communication via a wireless LAN as well and is assigned with a unique communication address on the wireless LAN. For example, when the inspection vehicle 2 stops in a maintenance area, the inspection vehicle 2 transmits inspection data to the diagnostic computer 72 via an access point 70. Note that a USB memory or the like may be attached to the inspection vehicle 2, and the inspection vehicle 2 may output inspection data to the diagnostic computer 72 via the USB memory or the like. Reference numeral 73 indicates a monitor, and a reference numeral 74 indicates a user input such as a keyboard or a mouse.

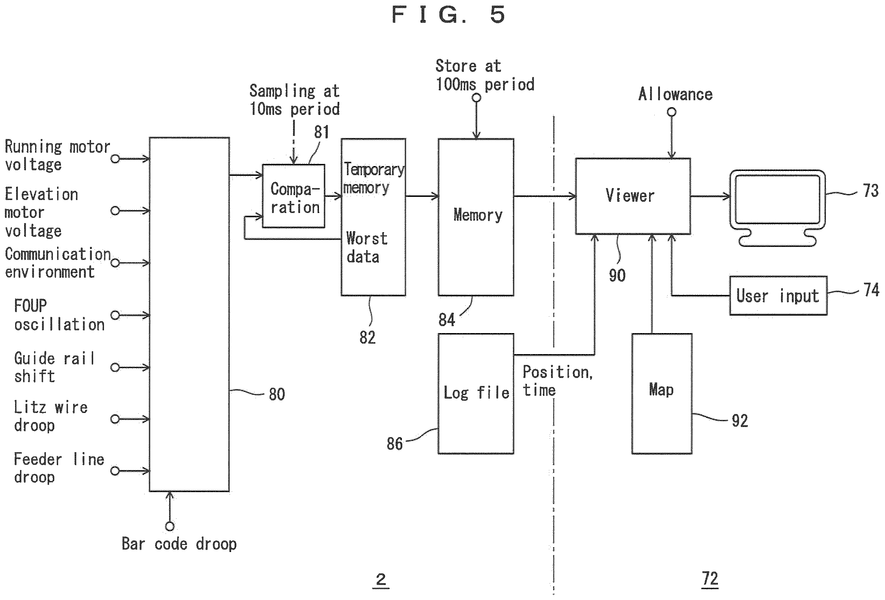

FIG. 5 shows inspection data collection performed by the inspection vehicle 2, and processing performed by the diagnostic computer 72. As the types of inspection data, defined are a target value, a "normal" range, an "alarm" range that indicates deviation from the "normal" range, and an "abnormal" range that indicates deviation from the "alarm" range. A sampler 80 samples inspection data from a sensor or the like at a sampling period of 10 ms, for example. Inspection data is processed by a comparator 81 and a temporary memory 82, and worst data (data that is most deviated from the target value) within a memory period of 100 ms, for example, is written in a memory 84. The memory 84 is a non-volatile memory such as an EEPROM. Note that the communication environment means the strength of the received electric field and the communication success rate. Every type of inspection data is processed in the same manner, and therefore processing for only one type of data is shown in the drawing. The comparator 81 performs a comparison in order to determine which of the inspection data in the temporary memory 82 and the current inspection data is more deviated from the target value, and writes the inspection data that is more deviated from the target value (the worst data) into the temporary memory 82. The memory 84 stores the worst data at a storage period of 100 ms.

Each record of inspection data to be stored includes an inspection data value and a rating such as "failure" , "alarm" , and "normal" . Time is identified from the address of the record, and the position on the travelling route (which position on which rail) is identified from time and the position that are recorded in a log file 86. Time data and position data may be added to each record of inspection data.

The diagnostic computer 72 processes the records of inspection data in the memory 84 and the data in the log file 86 by a viewer 90. With information regarding the layout of the travelling route which is stored in a map memory 92, the viewer 90 displays inspection data on the monitor 73 with superimposing the inspection data on the layout of the travelling route. In response to this display, the operator may input a question, perform a search, and so on via the user input 74.

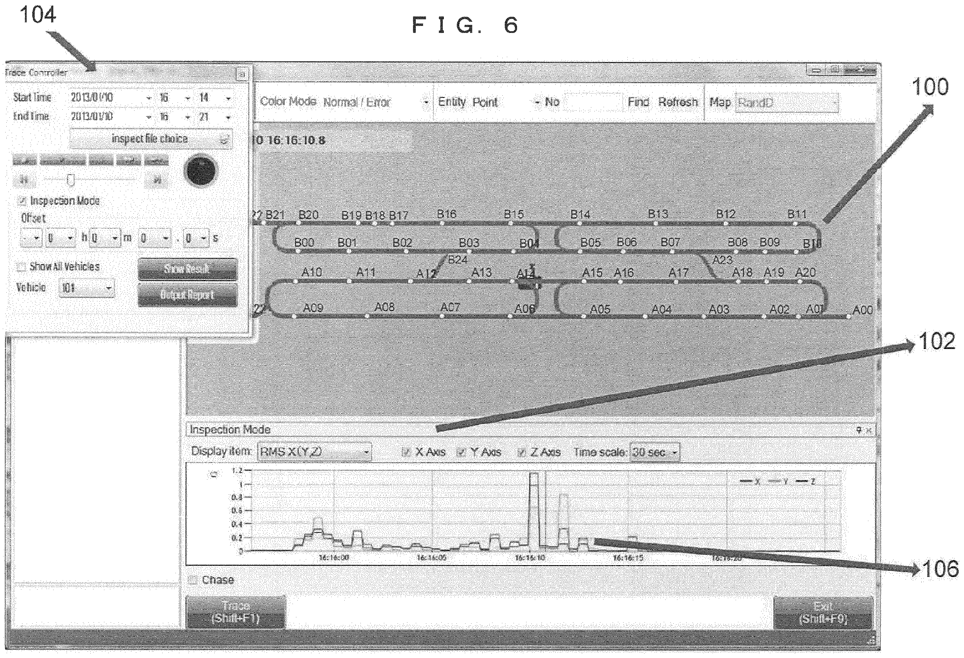

FIGS. 6 to 8 show examples of display on the monitor. FIG. 6 shows a display; on its center position an inspection vehicle is. In a display area 100, the position of the inspection vehicle is indicated with a rectangular mark which is superimposed on the layout of the travelling route, and the inspection vehicle travels on the layout. Note that signs such as "A01" indicate points that indicate positions on the travelling route. A display area 102 shows the strengths of oscillation along the X axis, the Y axis, and the Z axis which may be replaced with another inspection item. A display area 104 shows a time range to be displayed, and the behavior of oscillation within this time range is shown in the display area 106.

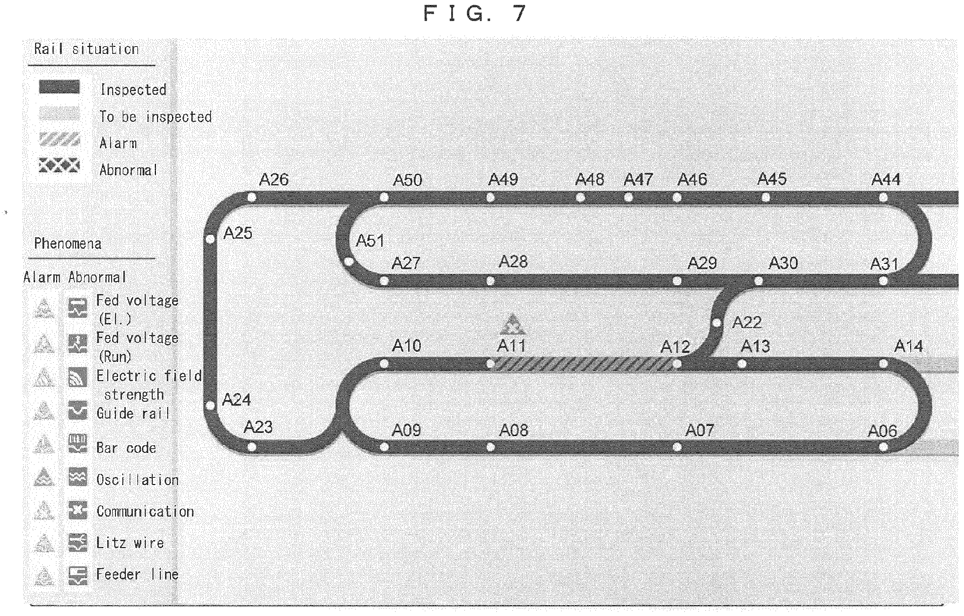

FIG. 7 is a display showing the results of inspection of the travelling route. The travelling route is divided into sections that have been inspected and sections to be inspected. Among the sections that have been inspected, "normal" sections are shown in black, and "alarm" (between "abnormal" and "normal" ) sections and "abnormal" sections are displayed in other colors or other shapes. Icons indicating the types of problems are displayed for each of "alarm" and "abnormal" . The icons for "alarm" and the icons for "abnormal" are displayed in other colors or other shapes. In FIG. 7, an alarm indicating a low communication success rate is issued for the section between points A11 and A12.

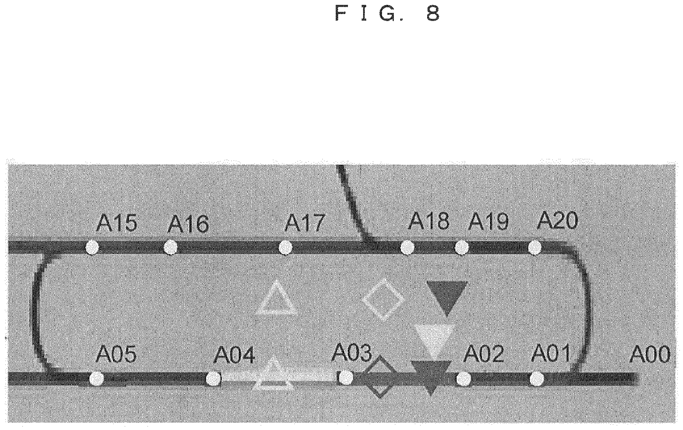

In order to ensure the accuracy of the inspection, the inspection vehicle is caused to travel multiple times around the travelling route. In this case, the results are easy to see if the icons are displaced for each round. Such an example is shown in FIG. 8. FIG. 8 shows inspection data of three rounds. In the section between the points A02 and A03, the voltage fed to the running motor is "abnormal" in the first and the third rounds, and "alarm" in the second round. In addition, the oscillation of the FOUP is "abnormal" in the first round, "normal" in the second round, and "alarm" in the third round. In the section between the points A03 and A04, the voltage fed to the elevation motor is "alarm" in the first and the third rounds, and "normal" in the second round.

The embodiment makes it possible to inspect an overhead travelling vehicle system that includes hundreds of overhead travelling vehicles during the operation of the overhead travelling vehicle system.

### List of Reference Numerals

2 Inspection vehicle 4 Rail 6 Carriage unit 8 Driving wheel unit
10 Main body 12 Running wheel 14 Running motor 16 Biasing part
20 Follower wheel 22, 24 Guide roller 28 Pick-up unit
30 Cross-roller bearing 32 Linear sensor
34 Lateral unit 36 *θ* unit 38 Hoist
40 Hand 41 Chuck 46 Displacement sensor
48 Oscillation sensor 50, 51 Tread 52 Litz wire holder
53 Guide 54 eddy current sensor 55 Pick-up core
56 Antenna 57 Rod 58 Litz wire
59 Feeder line 60 Rectifier 62 Capacitor
64 Inverter 66 Elevation motor 68 Communication unit
70 Access point 72 Diagnostic computer 73 Monitor
74 User input 75 Ground controller 76 LAN
80 Sampler 81 Comparator 82 Temporary memory
84 Memory 86 Log file memory 90 Viewer
92 Map memory 100-106 Display area
L1-L4 Light source D1-D4 Light-receiving element S1, S2 Voltage sensor
S3 Communication environment measurer

## Claims

1. A transport vehicle system wherein a plurality of transport vehicles and at least one inspection vehicle (2) travel along a travelling route according to instructions from a ground controller (75):
wherein the inspection vehicle (2) and the plurality of transport vehicles have common rules for avoiding collision and speed regulation and a common pattern for acceleration and deceleration; and
wherein the inspection vehicle (2) is configured to measure inspection data of the travelling route while travelling along the travelling route,
**characterized in that** the inspection vehicle (2) is further configured to sample inspection data at each sampling period and store inspection data within one storage period that is most deviated from a permissible range as inspection data for the storage period, one storage period comprising a plurality of sampling periods.

2. The transport vehicle system according to claim 1,
wherein the inspection vehicle (2) is configured to store inspection data in a memory (84) without outputting the inspection data to outside while the inspection vehicle (2) is travelling.

3. The transport vehicle system according to claim 1 or 2,
wherein the inspection vehicle (2) is configured to store inspection data that is most deviated from a target value within the permissible range, when no inspection data is out of the permissible range in a storage period.

4. The transport vehicle system according to any one of claims 1 to 3,
wherein the plurality of transport vehicles and the inspection vehicle (2) are configured to communicate with the ground controller (75) via a LAN (76); and
wherein the inspection vehicle (2) is further provided with a wireless communication unit (68) that is assigned a unique communication address and is configured to output the inspection data to a diagnostic computer (72) for the transport vehicle system via a wireless access point (70) connected to the diagnostic computer (72).

5. The transport vehicle system according to any one of claims 1 to 4,
wherein the inspection vehicle (2) and the plurality of transport vehicles are configured to transport a same type of carriers, and wherein the inspection vehicle (2) is configured to measure oscillation that a carrier undergoes during transportation as inspection data.

6. The transport vehicle system according to any one of claims 1 to 5,
wherein the inspection vehicle (2) and the plurality of transport vehicles are configured to receive electricity from a feeder line (59) that is laid on the travelling route, without being in contact with the feeder line (59), and
wherein the inspection vehicle (2) is configured to measure electrical power received from the feeder line (59) as inspection data.

7. The transport vehicle system according to any one of claims 1 to 6,
wherein the inspection vehicle (2) and the plurality of transport vehicles are configured to perform wireless communication with the ground controller (75), and
wherein the inspection vehicle (2) is configured to measure strength of electric field received via wireless communication and a success rate of the wireless communication as inspection data.

8. The transport vehicle system according to any one of claims 1 to 7,
wherein the inspection vehicle (2) and the plurality of transport vehicles are configured to read bar codes provided on the travelling route, and
wherein the inspection vehicle (2) is configured to measure data that indicates a good or bad attachment of the bar codes as inspection data.

9. The transport vehicle system according to any one of claims 1 to 8,
wherein the travelling route is provided with a guide (53) that guides the inspection vehicle (2) and the plurality of transport vehicles, and
wherein the inspection vehicle (2) is configured to measure data that indicates a good or bad positional condition of the guide (53) as inspection data.

10. The transport vehicle system according to claim 6,
wherein the inspection vehicle (2) is configured to measure inspection data regarding slack in the feeder line (59).

11. The transport vehicle system according to any one of claims 1 to 10,
wherein the diagnostic computer (72) is configured to display information regarding problems in the transport vehicle system on a monitor (73) with superimposing the information regarding the problems on a layout of the travelling route.

12. The transport vehicle system according to claim 11,
wherein the diagnostic computer (72) is configured to display icons while changing types of the icons according to types of the problems in the transport vehicle system and colors of the icons according to extent of the problems.

13. A method for inspecting a transport vehicle system wherein a plurality of transport vehicles travel along a travelling route according to instructions from a ground controller (75):
wherein the transport vehicle system includes an inspection vehicle (2) that has common rules for avoiding collision and speed regulation and a common pattern for acceleration and deceleration with the plurality of transport vehicles; and
**characterized in that**, in order to measure inspection data of the travelling route while travelling along the travelling route,
the inspection vehicle (2) samples inspection data at each sampling period and stores inspection data within one storage period that is most deviated from a permissible range as inspection data for the storage period, one storage period comprising a plurality of sampling periods.

14. An inspection vehicle (2) that inspects a travelling route in a transport vehicle system wherein a plurality of transport vehicles and the inspection vehicle (2) travel along the travelling route according to instructions from a ground controller (75):
wherein the inspection vehicle (2) has common rules for avoiding collision and speed regulation and a common pattern for acceleration and deceleration with the plurality of transport vehicles; and
wherein the inspection vehicle (2) is configured to: measure inspection data of the travelling route while travelling along the travelling route,
**characterized in that** the inspection vehicle (2) is further configured to sample inspection data at each sampling period and store inspection data within one storage period that is most deviated from a permissible range as the inspection data for the storage period, one storage period comprising a plurality of sampling periods.

## Patentansprüche

1. Ein Transportfahrzeugsystem, bei dem eine Mehrzahl von Transportfahrzeugen und zumindest ein Kontrollfahrzeug (2) sich gemäß Anweisungen von einer Bodensteuerung (75) entlang einer Bewegungsstrecke bewegen;
wobei das Kontrollfahrzeug (2) und die Mehrzahl von Transportfahrzeugen gemeinsame Regeln für eine Vermeidung von Zusammenstößen und Geschwindigkeitsregulierung und ein gemeinsames Muster für Beschleunigung und Verlangsamung aufweisen; und
wobei das Kontrollfahrzeug (2) konfiguriert ist, Kontrolldaten der Bewegungsstrecke zu messen, während sich dasselbe entlang der Bewegungsstrecke bewegt,
**dadurch gekennzeichnet, dass** das Kontrollfahrzeug (2) ferner konfiguriert ist, Kontrolldaten bei jeder Abtastperiode abzutasten und Kontrolldaten innerhalb einer Speicherperiode, die am stärksten von einem erlaubten Bereich abweichen, als Kontrolldaten für die Speicherperiode zu speichern, wobei eine Speicherperiode eine Mehrzahl von Abtastperioden aufweist.

2. Das Transportfahrzeugsystem gemäß Anspruch 1,
bei dem das Kontrollfahrzeug (2) konfiguriert ist, Kontrolldaten in einem Speicher (84) zu speichern ohne die Kontrolldaten nach außen auszugeben, während sich das Kontrollfahrzeug (2) bewegt.

3. Das Transportfahrzeugsystem gemäß Anspruch 1 oder 2,
bei dem das Kontrollfahrzeug (2) konfiguriert ist, Kontrolldaten, die am stärksten von einem Zielwert innerhalb des erlaubten Bereichs abweichen, wenn keine Kontrolldaten außerhalb des erlaubten Bereichs liegen, innerhalb einer Speicherperiode zu speichern.

4. Das Transportfahrzeugsystem gemäß einem der Ansprüche 1 bis 3,
bei dem die Mehrzahl von Transportfahrzeugen und das Kontrollfahrzeug (2) konfiguriert sind, über ein LAN (76) mit der Bodensteuerung (75) zu kommunizieren; und
wobei das Kontrollfahrzeug (2) ferner mit einer Drahtloskommunikationseinheit (68) versehen ist, die einer einmaligen Kommunikationsadresse zugewiesen ist und konfiguriert ist, die Kontrolldaten für das Transportfahrzeugsystem über einen drahtlosen Zugangspunkt (70), der mit dem Diagnosecomputer (72) verbunden ist, an einen Diagnosecomputer (72) auszugeben.

5. Das Transportfahrzeugsystem gemäß einem der Ansprüche 1 bis 4,
bei dem das Kontrollfahrzeug (2) und die Mehrzahl von Transportfahrzeugen konfiguriert sind, eine gleiche Art von Trägern zu transportieren und wobei das Kontrollfahrzeug (2) konfiguriert ist, eine Oszillation, die ein Träger während der Beförderung erfährt, als Kontrolldaten zu messen.

6. Das Transportfahrzeugsystem gemäß einem der Ansprüche 1 bis 5,
bei dem das Kontrollfahrzeug (2) und die Mehrzahl von Transportfahrzeugen konfiguriert sind, Elektrizität von einer Zuführungsleitung (59) zu empfangen, die auf der Bewegungsstrecke platziert ist, ohne mit der Zuführungsleitung (59) in Kontakt zu sein; und
wobei das Kontrollfahrzeug (2) konfiguriert ist, elektrische Leistung, die von der Zuführungsleitung (59) empfangen wird, als Kontrolldaten zu messen.

7. Das Transportfahrzeugsystem gemäß einem der Ansprüche 1 bis 6,
bei dem das Kontrollfahrzeug (2) und die Mehrzahl von Transportfahrzeugen konfiguriert sind, Drahtloskommunikation mit der Massesteuerung (75) durchzuführen und
wobei das Kontrollfahrzeug (2) konfiguriert ist, eine Stärke des elektrischen Felds, das über Drahtloskommunikation empfangen wird, und eine Erfolgsrate der Drahtloskommunikation als Kontrolldaten zu messen.

8. Das Transportfahrzeugsystem gemäß einem der Ansprüche 1 bis 7,
bei dem das Kontrollfahrzeug (2) und die Mehrzahl von Transportfahrzeugen konfiguriert sind, Barcodes zu lesen, die auf der Bewegungsstrecke vorgesehen sind und
wobei das Kontrollfahrzeug (2) konfiguriert ist, Daten, die eine gute oder schlechte Anbringung der Barcodes anzeigen, als Kontrolldaten zu messen.

9. Das Transportfahrzeugsystem gemäß einem der Ansprüche 1 bis 8,
bei dem die Bewegungsstrecke mit einer Führung (53) versehen ist, die das Kontrollfahrzeug (2) und die Mehrzahl von Transportfahrzeugen führt und
wobei das Kontrollfahrzeug (2) konfiguriert ist, Daten, die einen guten oder schlechten Positionszustand der Führung (53) anzeigen, als Kontrolldaten zu messen.

10. Das Transportfahrzeugsystem gemäß Anspruch 6,
bei dem das Kontrollfahrzeug (2) konfiguriert ist, Kontrolldaten bezüglich eines Durchhangs in der Zuführungsleitung (59) zu messen.

11. Das Transportfahrzeugsystem gemäß einem der Ansprüche 1 bis 10,
bei dem der Diagnosecomputer (72) konfiguriert ist, Informationen in Bezug auf Probleme in dem Transportfahrzeugsystem auf einem Bildschirm (73) anzuzeigen, bei dem die Informationen in Bezug auf die Probleme auf ein Layout der Bewegungsstrecke überlagert werden.

12. Das Transportfahrzeugsystem gemäß Anspruch 11,
bei dem der Diagnosecomputer (72) konfiguriert ist, Icons anzuzeigen, während Icon-Typen gemäß Problem-Typen in dem Transportfahrzeugsystem und Farben der Icons gemäß einem Ausmaß der Probleme geändert werden.

13. Ein Verfahren zum Kontrollieren eines Transportfahrzeugsystems, bei dem eine Mehrzahl von Transportfahrzeugen sich gemäß Anweisungen von einer Bodensteuerung (75) entlang einer Bewegungsstrecke bewegt;
wobei das Transportfahrzeugsystem ein Kontrollfahrzeug (2) umfasst, das mit der Mehrzahl von Transportfahrzeugen gemeinsame Regeln für eine Vermeidung von Zusammenstößen und Geschwindigkeitsregulierung und ein gemeinsames Muster für Beschleunigung und Verlangsamung aufweist; und
**dadurch gekennzeichnet, dass** das Kontrollfahrzeug (2), um Kontrolldaten der Bewegungsstrecke zu messen, während es sich entlang der Bewegungsstrecke bewegt,
Kontrolldaten bei jeder Abtastperiode abtastet und Kontrolldaten innerhalb einer Speicherperiode, die am stärksten von einem erlaubten Bereich abweichen, als Kontrolldaten für die Speicherperiode speichert, wobei eine Speicherperiode eine Mehrzahl von Abtastperioden aufweist.

14. Ein Kontrollfahrzeug (2), das eine Bewegungsstrecke in einem Transportfahrzeugsystem kontrolliert, wobei eine Mehrzahl von Transportfahrzeugen und das Kontrollfahrzeug (2) sich gemäß Anweisungen von einer Bodensteuerung (75) entlang der Bewegungsstrecke bewegen;
wobei das Kontrollfahrzeug (2) mit der Mehrzahl von Transportfahrzeugen gemeinsame Regeln für eine Vermeidung von Zusammenstößen und Geschwindigkeitsregulierung und ein gemeinsames Muster für Beschleunigung und Verlangsamung aufweist; und
wobei das Kontrollfahrzeug (2) konfiguriert ist, Kontrolldaten der Bewegungsstrecke zu messen, während es sich entlang der Bewegungsstrecke bewegt,
**dadurch gekennzeichnet, dass** das Kontrollfahrzeug (2) ferner konfiguriert ist, Kontrolldaten bei jeder Abtastperiode abzutasten und Kontrolldaten innerhalb einer Speicherperiode, die am stärksten von einem erlaubten Bereich abweichen, als Kontrolldaten für die Speicherperiode zu speichern, wobei eine Speicherperiode eine Mehrzahl von Abtastperioden aufweist.

## Revendications

1. Système de véhicule de transport, dans lequel une pluralité de véhicules de transport et au moins un véhicule d'inspection (2) se déplacent le long d'un itinéraire de déplacement selon les instructions d'un dispositif de commande au sol (75):
dans lequel le véhicule d'inspection (2) et la pluralité de véhicules de transport disposent de règles communes pour éviter les collisions et de régulation de vitesse et d'un modèle commun pour l'accélération et la décélération; et
dans lequel le véhicule d'inspection (2) est configuré pour mesurer les données d'inspection de l'itinéraire de déplacement tout en se déplaçant le long de l'itinéraire de déplacement,
**caractérisé par le fait que** le véhicule d'inspection (2) est configuré par ailleurs pour échantillonner les données d'inspection à chaque période d'échantillonnage et pour mémoriser les données d'inspection pendant une période de mémorisation qui s'écartent le plus d'une plage admissible comme données d'inspection pour la période de mémorisation, une période de mémorisation comprenant une pluralité de périodes d'échantillonnage.

2. Système de véhicule de transport selon la revendication 1,
dans lequel le véhicule d'inspection (2) est configuré pour mémoriser les données d'inspection dans une mémoire (84) sans sortir les données d'inspection vers l'extérieur tandis que le véhicule d'inspection (2) se déplace.

3. Système de véhicule de transport selon les revendications 1 ou 2,
dans lequel le véhicule d'inspection (2) est configuré pour mémoriser les données d'inspection qui s'écartent le plus d'une valeur cible dans la plage admissible lorsqu'aucune donnée d'inspection ne se situe en dehors de la plage admissible pendant une période de mémorisation.

4. Système de véhicule de transport selon l'une quelconque des revendications 1 à 3,
dans lequel la pluralité de véhicules de transport et le véhicule d'inspection (2) sont configurés pour communiquer avec le dispositif de commande au sol (75) via un LAN (76); et
dans lequel le véhicule d'inspection (2) est par ailleurs muni d'une unité de communication sans fil (68) à laquelle est attribuée une adresse de communication unique et qui est configurée pour sortir les données d'inspection vers un ordinateur de diagnostic (72) pour le système de véhicule de transport à travers un point d'accès sans fil (70) connecté à l'ordinateur de diagnostic (72).

5. Système de véhicule de transport selon l'une quelconque des revendications 1 à 4,
dans lequel le véhicule d'inspection (2) et la pluralité de véhicules de transport sont configurés pour transporter un même type de porteurs, et dans lequel le véhicule d'inspection (2) est configuré pour mesurer comme données d'inspection l'oscillation que subit un porteur pendant le transport.

6. Système de véhicule de transport selon l'une quelconque des revendications 1 à 5,
dans lequel le véhicule d'inspection (2) et la pluralité de véhicules de transport sont configurés pour recevoir de l'électricité d'une ligne d'alimentation (59) qui est posée sur l'itinéraire de déplacement, sans être en contact avec la ligne d'alimentation (59), et
dans lequel le véhicule d'inspection (2) est configuré pour mesurer comme données d'inspection l'énergie électrique reçue de la ligne d'alimentation (59).

7. Système de véhicule de transport selon l'une quelconque des revendications 1 à 6,
dans lequel le véhicule d'inspection (2) et la pluralité de véhicules de transport sont configurés pour effectuer une communication sans fil avec le dispositif de commande au sol (75), et
dans lequel le véhicule d'inspection (2) est configuré pour mesurer comme données d'inspection l'intensité du champ électrique reçue via une communication sans fil et un taux de réussite de la communication sans fil.

8. Système de véhicule de transport selon l'une quelconque des revendications 1 à 7,
dans lequel le véhicule d'inspection (2) et la pluralité de véhicules de transport sont configurés pour lire les codes à barres prévus sur l'itinéraire de déplacement, et
dans lequel le véhicule d'inspection (2) est configuré pour mesurer comme données d'inspection les données qui indiquent un bon ou un mauvais respect des codes à barres.

9. Système de véhicule de transport selon l'une quelconque des revendications 1 à 8,
dans lequel l'itinéraire de déplacement est pourvu d'un guide (53) qui guide le véhicule d'inspection (2) et la pluralité de véhicules de transport, et
dans lequel le véhicule d'inspection (2) est configuré pour mesurer comme données d'inspection les données qui indiquent une bonne ou une mauvaise condition de position du guide (53).

10. Système de véhicule de transport selon la revendication 6,
dans lequel le véhicule d'inspection (2) est configuré pour mesurer les données d'inspection relatives au mou dans la ligne d'alimentation (59).

11. Système de véhicule de transport selon l'une quelconque des revendications 1 à 10,
dans lequel l'ordinateur de diagnostic (72) est configuré pour afficher les informations relatives aux problèmes dans le système de véhicule de transport sur un moniteur (73) avec superposition des informations relatives aux problèmes sur une disposition de l'itinéraire de déplacement.

12. Système de véhicule de transport selon la revendication 11,
dans lequel l'ordinateur de diagnostic (72) est configuré pour afficher des icônes tout en changeant les types des icônes selon les types de problèmes dans le système de véhicule de transport et les couleurs des icônes selon l'etendue des problèmes.

13. Procédé permettant d'inspecter un système de véhicule de transport dans lequel une pluralité de véhicules de transport se déplace le long d'un itinéraire de déplacement selon les instructions d'un dispositif de commande au sol (75);
dans lequel le système de véhicule de transport comporte un véhicule d'inspection (2) qui dispose de règles communes pour éviter les collisions et de régulation de vitesse et d'un modèle commun pour l'accélération et la décélération avec la pluralité de véhicules de transport; et
**caractérisé par le fait que** le véhicule d'inspection (2), pour mesurer les données d'inspection de l'itinéraire de déplacement tout en se déplaçant le long de l'itinéraire de déplacement,
échantillonne les données d'inspection à chaque période d'échantillonnage et mémorise les données d'inspection pendant une période de mémorisation qui s'écartent le plus d'une plage admissible comme données d'inspection pour la période de mémorisation, une période de mémorisation comprenant une pluralité de périodes d'échantillonnage.

14. Véhicule d'inspection (2) qui inspecte un itinéraire de déplacement dans un système de véhicule de transport dans lequel une pluralité de véhicules de transport et le véhicule d'inspection (2) se déplacent le long de l'itinéraire de déplacement selon les instructions d'un dispositif de commande au sol (75):
dans lequel le véhicule d'inspection (2) dispose de règles communes pour éviter les collisions et de régulation de vitesse et d'un modèle commun d'accélération et de décélération avec la pluralité de véhicules de transport; et
dans lequel le véhicule d'inspection (2) est configuré pour mesurer les données d'inspection de l'itinéraire de déplacement tout en se déplaçant le long de l'itinéraire de déplacement,
**caractérisé par le fait que** le véhicule d'inspection (2) est configuré par ailleurs pour échantillonner les données d'inspection à chaque période d'échantillonnage et pour mémoriser les données d'inspection pendant une période de mémorisation qui s'écartent le plus d'une plage admissible comme données d'inspection pour la période de mémorisation, une période de mémorisation comprenant un pluralité de périodes d'échantillonnage.
